# FASCICULE DE BREVET EUROPEEN

(11) **EP 0 776 719 B1**
(45) Date de publication et mention de la délivrance du brevet: **22.05.2002**
(21) Numéro de dépôt: 96402559.7
(22) Date de dépôt: 27.11.1996
(51) Int. Cl.: B23B 31/11, B23C 5/10

(54) **Outil de coupe rotatif à tête interchangeable utilisable pour des vitesses de coupe élevées**
Rotierendes Schneidwerkzeug mit ersätzbarem Kopf für hohe Schneidgeschwindigkeiten
Rotational cutting tool with an exchangeable head usable at high cutting speeds

(30) Priorité: 28.11.1995 FR 9514663
(43) Date de publication de la demande: 04.06.1997
(73) Titulaire: Boudard, Guy, 94800 Villejuif (FR)
(72) Inventeur: Boudard, Guy, 94800 Villejuif (FR)
(74) Mandataire: de Saint-Palais, Arnaud Marie

(56) Documents cités:
- EP-A- 0 298 937
- EP-A- 0 638 384
- EP-A- 0 661 123
- EP-A- 0 683 002
- DE-U- 7 827 203
- FR-A- 1 019 411
- US-A- 2 328 602

## Description

La présente invention concerne un outil de coupe rotatif à tête interchangeable selon le préambule de la revendication 1 et comme connu par example du document EP-A-0 298 937.

Elle s'applique notamment au façonnage d'objets par enlèvement de matière tels que des usinages, fraisages ou alésages, par exemple d'outillages de forme.

D'une façon générale, on sait que les outils de coupe habituellement utilisés pour des applications de ce genre, sont au moins partiellement réalisés en des matériaux nobles, présentant une grande dureté, tels que, par exemple, le carbure de silicium, le "CERMET", le "C.B.N.".

Ils comprennent une partie active constituée par une tête munie d'une ou plusieurs arêtes de coupes formée sur des dentures, des goujures ou des cannelures et une partie statique consistant en un corps habituellement cylindrique et/ou tronconique, qui assure la liaison entre la tête et un support tournant tel qu'une broche de machine outil.

Il existe à l'heure actuelle, deux types principaux d'outils de coupe de ce genre, à savoir les outils de coupe monobloc qui sont taillés dans la masse et les outils à plaquettes rapportées, éventuellement amovibles.

Les outils de coupe monobloc sont entièrement réalisés en matériau noble et sont donc relativement coûteux.

Par contre, ils se prêtent mieux à des vitesses de rotation élevées et peuvent comprendre des têtes munies d'une pluralité d'arêtes de coupe permettant de multiplier la vitesse d'avance de l'outil et donc sa productivité.

Les outils de coupe à plaquettes rapportées comprennent une structure monobloc en acier constituant le corps et une fraction de la tête, laquelle est conformée de manière à recevoir au moins une plaquette réalisée en matériau noble et portant au moins une arête de coupe.

Cette solution moins coûteuse présente cependant l'inconvénient de ne pas convenir pour des vitesses de coupe élevées, notamment en raison :
- des défauts de rigidité du corps en acier (module d'Young),
- de la tenue de la fixation tête/plaquette à haute vitesse, même dans le cas où cette fixation est obtenue par brasage,
- des dissymétries et de l'hétérogénéité de la tête.

Par ailleurs, un inconvénient commun aux deux solutions précédemment évoquées, consiste en ce que, pour couvrir une gamme étendue d'applications, l'opérateur doit disposer d'un jeu relativement important d'outils de coupe complets (corps + tête), ce qui représente un investissement important.

Pour tenter de supprimer ces inconvénients, on a proposé de réaliser les outils de coupe en deux parties déconnectables, de manière à pouvoir assembler sur un même corps une pluralité de têtes.

Toutefois, jusqu'ici cette solution qui se trouve illustrée dans les brevets EP-A-0 298 937, US-A-2 328 602 et DE 7827203 U ne convenait pas bien pour des vitesses de coupe élevées en raison notamment des vibrations engendrées par les effets combinés :
- de la répartition non homogène des masses au niveau de l'assemblage corps/tête,
- de la transmission non uniforme des contraintes au niveau de cet assemblage, et
- du nombre et de la disposition des arêtes de coupe qui, selon les conformations usuelles engendrent des chocs transversaux au contact de la matière à usiner.

Ces vibrations conduisent à une qualité défectueuse du travail réalisé ainsi qu'à un phénomène d'usure prématurée de l'outil de coupe ainsi que de son support tournant.

L'invention a donc plus particulièrement pour but de supprimer ces inconvénients.

Elle propose à cet effet, un outil de coupe à tête interchangeable ayant les caracteristiques de la revendication 1.

Il est clair que grâce à ces dispositions, il est possible d'obtenir un excellent équilibrage des masses en rotation, ainsi qu'une excellente transmission des contraintes, tant en ce qui concerne le couple que les efforts transversaux exercés au niveau de la tête de coupe autocentrée.

La tête de coupe est donc interchangeable et il est donc possible de prévoir une gamme complète de têtes de coupe pouvant se monter sur un même corps éventuellement réalisé dans un même matériau noble pour obtenir les caractéristiques de rigidité requise.

De même, la tête de coupe pourra avantageusement comprendre une pluralité d'arêtes de coupe hélicoïdales dont les avantages se combinent à ceux obtenus par l'assemblage cône/face entre tête coupante et corps pour supprimer les phénomènes vibratoires précédemment évoqués tout en permettant un enchaînement d'enlèvement de matière plus doux. Il devient alors possible d'atteindre des vitesses de coupe relativement élevées, par exemple de l'ordre de 250 et 400 m/min dans des aciers de 1000 à 1400 Mpa.

Un mode d'exécution de l'invention sera décrit ci-après, à titre d'exemple non limitatif, avec référence aux dessins annexés dans lesquels :

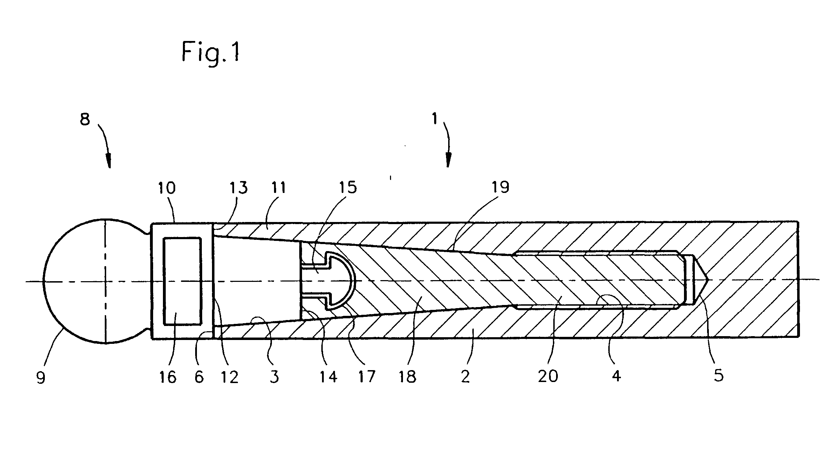

La figure 1 est une vue en coupe axiale d'un outil de coupe selon l'invention ;

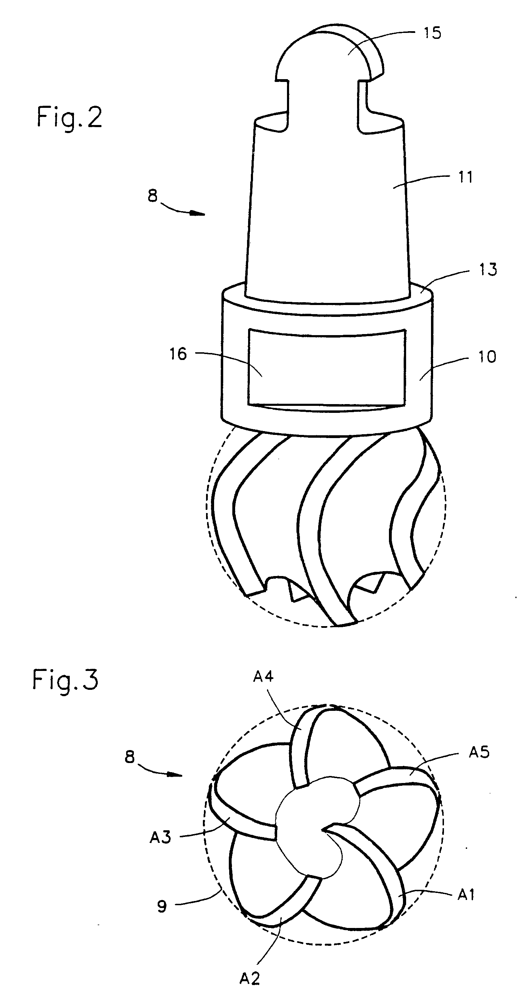

La figure 2 est une vue en perspective, à plus grande échelle, de la tête de coupe de l'outil représenté sur la figure 1 ;
La figure 3 est une vue de face de la tête de coupe représentée figure 2.

Dans cet exemple, l'outil de coupe 1 comprend un corps cylindrique 2, en partie tubulaire, dont la cavité interne comprend successivement, à partir de son extrémité antérieure, une partie tronconique 3, suivie d'une partie cylindrique taraudée 4 se terminant par un fond 5.

Cette cavité interne débouche à l'extérieur au niveau de l'extrémité antérieure du corps 2 par un orifice circulaire bordé par une face annulaire transversale 6 (située dans un plan de section droite du corps 2).

Le corps 2 est destiné à recevoir une tête de coupe amovible 8, ici de type boule, présentant une forme sensiblement sphérique 9 qui s'étend sur environ 240° et qui comprend de préférence une pluralité d'arêtes de coupe hélicoïdales 10, convergeant vers le sommet de la boule (dans l'axe de la tête 8).

La base de la forme sphérique 9 de la tête (opposée au sommet) est prolongée par une queue sensiblement cylindrique 10 suivie d'une partie tronconique 11, de conicité égale à celle de la partie tronconique 3 de la cavité du corps 2.

La section de la grande base 12 de la partie tronconique 11 est inférieure à celle de la partie cylindrique 10, de manière à obtenir, au niveau de la jonction entre ces deux parties, un décrochement présentant la forme d'une surface annulaire 13 qui s'étend dans un plan de section droite de la queue 10.

La petite base 14 de la partie tronconique 11 est prolongée par un tenon à tête 15 de section sensiblement en forme de T, avec la partie transversale du T en forme de demi-cercle.

La partie cylindrique de la queue 10 présente deux méplats diamétralement opposés 16, sur lesquels peut s'engager une clé permettant la fixation par vissage de la tête de coupe 8, dans le corps 2 de la façon qui sera indiquée ci-après.

Le tenon à tête 15, qui est axé perpendiculairement à l'axe longitudinal de la queue 10 est destiné à s'assembler dans une mortaise 17, de section complémentaire réalisée à une extrémité d'une tige de liaison 18 présentant une forme cylindro-tronconique.

Cette tige comprend donc une partie tronconique 19 dont la grande base, qui constitue l'une des deux extrémités de la tige 18, est sensiblement au diamètre de la petite base de la partie tronconique 11 et porte la mortaise 17.

Cette partie tronconique 19 (qui s'étend dans le prolongement de la partie tronconique 11) présente également une conicité sensiblement égale à celle de la partie tronconique 3 de la cavité.

La petite base de cette partie tronconique 19 est prolongée par une partie cylindrique filetée 20, apte à venir se visser dans la partie cylindrique taraudée 4 de la cavité.

Grâce à ces dispositions, l'ensemble formé par la tête 8, sur laquelle est assemblée la tige 18, vient s'engager et se fixer par vissage de la partie cylindrique 20 de la tige 18 dans la partie cylindrique 4 de la cavité.

En fin de vissage, la surface conique continue résultant de la mise bout à bout des formes tronconiques de la queue 10 et de la tige 18, vient épouser étroitement la surface tronconique 3 de la cavité, tandis que la face annulaire 13 du corps 2 vient porter sur le décrochement annulaire 6 de la tête 8.

On obtient donc un assemblage de type "cône-face" autocentré, qui permet d'obtenir une excellente rigidité de l'outil et une transmission optimale des contraintes (symétrisation et élimination des contraintes dérivantes) au niveau de la liaison (qu'il s'agisse des contraintes axiales, transversales ou de torsion (couple)). Paradoxalement, la précision de l'autocentrage est accrue grâce au léger jeu qui existe dans la liaison tenon 15/mortaise 17.

Ce jeu permet de rendre l'autocentrage de la tête 8 indépendant de celui de la tige 18 qui subit le vissage.

Par ailleurs, la répartition des masses à l'intérieur de l'outil de coupe s'avère excellente et est très voisine de celle d'un outil monobloc. On s'affranchit donc des phénomènes de vibration résultant de la rotation de l'outil.

En fait, cet outil bénéficie des avantages inhérents au concept monobloc, dans une fonctionnalité universelle grâce au principe de l'amovibilité de l'outil coupant.

Comme précédemment mentionné, la tête de coupe pourra avantageusement comprendre une pluralité (plus de deux) d'arêtes coupantes A₁, A₂ ... Aₙ s'étendant hélicoïdalement par rapport à l'axe longitudinal de l'outil, de manière à assurer une performance accrue en enlèvement de matière et en réduisant d'une façon très significative les chocs lors du contact outils/matière.

Grâce à ces dispositions, non seulement on supprime des phénomènes vibratoires parasites, mais on obtient un enlèvement de matière plus doux, plus régulier et donc plus efficace. Les contraintes exercées au niveau de la tête se trouvent particulièrement adaptées au type d'assemblage "cône-face" utilisé.

De ce fait, les performances à grandes vitesses de l'outil en matière de qualité d'usinage et durée de vie, sont très supérieures à celle des outils à plaquettes rapportées.

La tête de coupe 8 peut être réalisée en une pièce monobloc, ou éventuellement avec arête de coupe rapportée par tout système de brasage ou soudure, en un matériau noble (carbures, "PCD", "C.B.N.", "CERMET", aciers rapides de tous types sans limitation de nouveaux matériaux et revêtements).

La denture hélicoïdale est taillée dans la masse avec usage de meules, adaptées au matériau de base, installées sur des machines automatisées (par exemple 5/6 axes).

Le taillage de la "goujure" de l'hélice est constant ou variable avec un pas d'hélice constant ou éventuellement variable.

La répartition de la denture, sur la périphérie de la tête de coupe, peut être régulière ou non.

Dans l'exemple représenté sur les dessins, la tête de coupe 8 qui présente une forme sphérique tronquée par une base circulaire, comprend cinq gorges définissant cinq arêtes de coupe hélicoïdales A₁ à A₅ partant de la base et convergeant vers le sommet de la tête 8.

Bien entendu, l'invention ne se limite pas à ce mode d'exécution.

Ainsi, la tête de coupe pourrait être de type différent, par exemple torique ou hémisphérique.

Elle pourrait comprendre un nombre différent de dents, par exemple de deux à huit dents.

De même, le corps 1 de l'outil pourrait présenter une forme extérieure autre que cylindrique, par exemple conique (cône ISD, cône H.S.K.) ou elliptique, prenant en compte la nature des broches de machine outils à vitesse classique ou à grande vitesse.

Ce corps 1 pourra être éventuellement réalisé en un matériau différent de celui de la tête. De même, la tige 18 pourra faire corps avec la tête 8, l'assemblage à tenon et mortaise étant alors supprimé.

## Revendications

1. Outil de coupe rotatif à tête interchangeable comprenant un corps (1) au moins en partie tubulaire, présentant une cavité axiale comprenant successivement, à partir d'un orifice, une portion tronconique (3) suivie d'une partie cylindrique taraudée (4), une tête de coupe (8) prolongée par une queue (10) présentant une forme tronconique au moins partiellement complémentaire de la portion tronconique (11) du corps et, une pièce de liaison (18) comprenant des moyens permettant son assemblage déconnectable sur ladite queue (10) et se terminant à l'opposé de ladite tête (8) par une portion cylindrique filetée (20) apte à venir se visser dans ladite partie cylindrique taraudée,
**caractérisé en ce que** :
- la susdite queue (10) présente successivement en partant de la tête, un décrochement annulaire radial (13), puis la susdite forme tronconique,
- le susdit corps (1) comprend un orifice bordé par une face annulaire radiale coaxiale (6),
- la susdite pièce de liaison (18) s'assemble sur la queue (10) grâce à un assemblage avec jeu comprenant un tenon à tête (15) et une mortaise (17) de forme complémentaire à celle du tenon, de manière à ce qu'en position vissée de la pièce de liaison (18) dans la partie taraudée (4), du corps (1), la partie tronconique (11) de la tête (8) vienne au contact de la partie tronconique (3) du corps (1) et que le décrochement annulaire radial (13) vienne porter sur ladite face annulaire radiale (6) en assurant ainsi une liaison de type cône/face autocentrée,
- la susdite tête (8) comprend plus de deux arêtes de coupe.
- L'outil est utilisable pour des vitesses de coupe élevées pouvant atteindre 250 à 400 m/min dans des aciers de 1000 à 1400 Mpa.

2. Outil de coupe selon la revendication 1, **caractérisé en ce que** la tête de coupe (8) comprend une pluralité d'arêtes de coupe hélicoïdales (A).

3. Outil de coupe selon la revendication 2, **caractérisé en ce que** les arêtes de coupe hélicoïdales (A) convergent vers le sommet de la tête de coupe (8).

4. Outil de coupe selon l'une des revendications précédentes,
**caractérisé en ce que** la tête de coupe (8) est réalisée en une pièce monobloc en une matière telle que le carbure de silicium, et comprend une denture hélicoïdale taillée dans la masse par meulage.

5. Outil de coupe selon l'une des revendications précédentes,
**caractérisé en ce que** la tête de coupe (8) est de type boule, torique, ou hémisphérique.

6. Outil de coupe selon l'une des revendications précédentes,
**caractérisé en ce que** ladite pièce de liaison (18) comprend une portion conique (19) s'étendant dans le prolongement de la partie conique (11) de la tête (8) et présentant une même conicité.

## Claims

1. Rotary cutting tool with interchangeable head, said tool able to be used for high cutting speeds of up to between 250 and 400 m/min in steels ranging between 1000 and 1400 Mpa and including a body (1), at least part of it being tubular, and having an axial cavity successively including starting from an orifice a truncated portion (3) followed by a tapped cylindrical portion (4), a cutting head (8) prolonged by a tail (10) having a truncated shape, at least partially, in addition to the truncated portion (11) of the body, and a linking piece (18) including means enabling it to assembled and disconnected on said tail (10) and ending opposite said head (8) via a threaded cylindrical portion (20) able to be screwed into said tapped cylindrical portion, said tool being **characterised in that**:
- said tail (10) successively has starting from the head an annular radial horizontal flexure (13) and then said truncated form,
- said body (1) includes an orifice bordered by a coaxial radial annular face (6),
- said linking piece (18) is assembled on the tail (10) by means of an assembling with play including a head tenon (15) and notch (17) having a shape complementary to that of the tenon so that when the linking piece (18) is screwed into the tapped portion (4) of the body (1), the truncated portion (11) of the head (8) comes into contact with the truncated portion (3) of the body (1) and the radial annular horizontal flexure (13) is borne onto said radial annular face (6), thus ensuring a standard self-centered cone/face link,
- said head (8) includes more than two cutting edges.
- The tool is able to be used for high cutting speeds ranging from between 250 and 400 m/min in steels from 1000 to 1400 Mpa.

2. Cutting tool according to claim 1, **characterised in that** the cutting head (8) includes a plurality of helical cutting edges (A).

3. Cutting tool according to claim 2, **characterised in that** the helical cutting edges (A) converge towards the top of the cutting head (8).

4. Cutting tool according to one of the preceding claims, **characterised in that** the cutting head (8) is made up of a single piece made of a material such as silicon carbide and includes a helical tooth carved from the block via grinding.

5. Cutting tool according to one of the preceding claims, **characterised in that** the cutting head (8) is of the ball, toric or hemispherical type.

6. Cutting tool according to one of the preceding claims, **characterised in that** said linking piece (18) includes a conical portion (19) extending in the extension of the conical portion (11) of the head (8) and having a given conicity.

## Patentansprüche

1. Rotierendes Schneidwerkzeug mit austauschbarem Kopf mit einem Korpus (1), der mindestens zum Teil röhrenförmig ist und einen axialen Hohlraum aufweist, der ausgehend von einer Öffnung nacheinander einen kegelstumpfförmigen Abschnitt (3), gefolgt von einem zylinderförmigen Abschnitt mit Innengewinde (4), einen Schneidkopf (8), der in einen Schaft (10) übergeht, mit einer kegelstumpfförmigen Gestalt, die mindestens teilweise eine Ergänzung zum kegelstumpfförmigen Abschnitt (11) des Körpers bildet, und ein Verbindungsstück (18), das Mittel für die lösbare Verbindung an dem genannten Schaft (10) aufweist und gegenüber dem genannten Schneidkopf (8) in einem zylinderförmigen Abschnitt mit Gewinde (20) endet, der sich in den genannten zylinderförmigen Abschnitt mit Innengewinde einschrauben lässt,
**dadurch gekennzeichnet, dass**:
- der genannte Schaft (10) nacheinander und angefangen beim Kopf einen ringförmigen Rücksprung (13) und sodann die oben genannte kegelstumpfförmige Form aufweist,
- der oben genannte Korpus (1) eine Öffnung aufweist, die von einer koaxialen ringförmigen und radialen Fläche (6) eingefasst wird.
- das oben genannte Verbindungsstück (18) dank einer Verbindung mit Spiel mit dem Schaft (10) verbunden ist, bestehend aus einem Zapfen (15) und einem Schlitz (17), dessen Form sich komplementär zu derjenigen des Zapfens verhält, so dass der kegelstumpfförmige Abschnitt (11) des Kopfes (8) in verschraubter Position des Verbindungsstücks (18) im Abschnitt mit Innengewinde (4) des Korpus (1) mit dem kegelstumpfförmigen Abschnitt (3) des Korpus (1) in Berührung steht und der radiale ringförmige Rücksprung (13) auf der genannten radialen Fläche (6) aufliegt und auf diese Weise die selbstzentrierende Verbindung vom Typ Konus/Fläche bildet,
- der genannte Kopf (8) mehr als zwei Schneidkanten aufweist
- das Werkzeug für hohe Schneidgeschwindigkeiten von 250 bis zu 400 m/Min. in Stahl mit 1000 bis 1400 Mpa verwendbar ist.

2. Schneidwerkzeug gemäß Patentanspruch 1, **dadurch gekennzeichnet, dass** der Schneidkopf (8) eine Mehrzahl von spiralförmigen Schneidkanten (A) aufweist.

3. Schneidwerkzeug gemäß Patentanspruch 2, **dadurch gekennzeichnet, dass** die spiralförmigen Schneidkanten (A) am Gipfel des Schneidkopfes (8) zusammenlaufen.

4. Schneidwerkzeug gemäß einem der voranstehenden Patentansprüche, **dadurch gekennzeichnet, dass** der Schneidkopf (8) aus einem einzigen Stück gefertigt ist und aus einem Werkstoff wie z.B. Siliziumkarbid besteht und eine spiralförmige Verzahnung aufweist, die anhand eines Schleifkörpers eingeschnitten worden ist.

5. Schneidwerkzeug gemäß einem der voranstehenden Patentansprüche, **dadurch gekennzeichnet, dass** der Schneidkopf (8) vom Typ Kugel, Torus oder Halbkugel ist.

6. Schneidwerkzeug gemäß einem der voranstehenden Patentansprüche, **dadurch gekennzeichnet, dass** das genannte Verbindungsstück (18) einen konischen Teil (19) beinhaltet, der sich in der Verlängerung des konischen Abschnitts (11) des Schneidkopfes (8) erstreckt und die gleiche Konizität aufweist.
